# EUROPEAN PATENT APPLICATION

(11) **EP 1 749 446 A1**
(43) Date of publication of application: **07.02.2007**
(21) Application number: 05107189.2
(22) Date of filing: 04.08.2005
(51) Int. Cl.: A23C 9/127, A23C 9/13

(54) **Well-tasting sweetened reduced-calorie dairy product**

(71) Applicant: Campina Nederland Holding B.V., 5301 LB Zaltbommel (NL)
(72) Inventor: Hauser, Judith Cornelia Maria, 6708 SE, Wageningen (NL); Zuurendonk, Peter Frederik, 2313 DR, Leiden (NL)
(74) Representative: van Westenbrugge, Andries

(57) **Abstract**

It has been found that a reduced-calorie and low-sugar dairy product can be prepared that fits for purposes of weight management, of which the taste closely resembles that of a non-reduced-calorie dairy product (full sugar reference), especially in terms of pleasant taste effects such as fruit intensity and balanced flavour profile, and in the absence of unpleasant off-taste. This can be achieved by hydrolysis of at least a large part of the lactose present in the dairy product, and by adding a combination of an artificial sweetener and fructose to the dairy product. The resulting product is well-tasting and can contain 30 - 50% less calories than its full sugar equivalent.

## Description

### FIELD OF THE INVENTION

The invention pertains to well-tasting sweetened reduced-calorie non-frozen low-lactose dairy products with balanced flavour profile and fruitiness, and minimal off-taste. The invention also pertains to well-tasting reduced-calorie dairy products containing artificial sweeteners and a method for preparation thereof.

### BACKGROUND OF THE INVENTION

Given the ever-increasing number of overweight or obese people, there is a great demand for tasteful low-calorie products. So far, the dairy industry has fulfilled this need by producing dairy products with low or almost no fat and without added sugar. Artificial low-calorie sweeteners are commonly included in these products in an attempt to imitate the taste of fully sugared products.

For example, US 4,956,186 describes a process for the production of low calorie, low lactose yoghurt. The aim is to provide a yoghurt that is low in calories, yet has a pleasant taste for those disliking the characteristic sharp acid flavor and is acceptable to lactose-intolerant individuals. First skim milk is ultrafiltrated to decrease the lactose content. Then the lactose content is further reduced by enzymatic cleavage of lactose so that the product is suitable for lactose intolerant individuals. To improve the taste the yoghurt is sweetened with an artificially sweetened flavoring.

A low-sugar frozen dairy dessert is disclosed in WO-A-92/02143, which is concerned with the problem of improving the texture of a frozen product low in sugar, but avoiding bulking agents such as maltodextrins or sorbitol that are conventionally used for that purpose. It is recognised that the sandiness mouthfeel involved with lactose crystallization in frozen dessert applications can be reduced by lactose hydrolysis. High potency sweeteners such as aspartame, alitame, acesulfame-K, saccharin and cyclamate may be added to sweeten the product. However, the disclosed product contains 4 wt% butter fat and can therefore not be seen as a truly low-calorie product.

However, so far success with low-calorie dairy products sweetened with artificial sweeteners has been modest. The artificial sweeteners are infamous for their off-taste: a metallic, bitter or lingering taste is frequently observed in products formulated with these ingredients, despite synergistic combinations of artificial sweeteners sometimes reported. These so called negative or unpleasant taste aspects may be unnoticed when masked by the low consumption temperature of a product, such as the frozen desserts according to WO-A-92/02143, but have certainly restricted the range of well-tasting low-calorie dairy products available on the consumer market. Moreover, next to the above-described unpleasant taste, these dairy products are often characterised as lacking satisfactory fruitiness and balanced flavour profile, a so called positive or pleasant taste perception.

It is known from US 5,380,541 and WO-A-99/38390 that artificial sweeteners, such as aspartame, acesulfame-K and sucralose, exhibit synergy with certain saccharides, among which fructose, meaning that the mixture of sweeteners show a higher increase of sweetness than would be expected from adding the sweeteners together. Furthermore, WO-A-99/38390 teaches that blends of sugar and sweeteners do not produce the typical aftertaste associated with these alternative sweeteners. However, reduced-calorie products which are sweetened this way still lack the fruit intensity and balanced flavour profile so much desired by consumers.

Therefore there is a need for well-tasting sweetened low-calorie dairy products, especially fermented dairy products, which resemble their fully-sugared conventional counterparts in taste, especially in well-recognized terms as fruit intensity, balanced flavour profile, and absence of off-taste caused by artificial sweeteners.

### DESCRIPTION OF THE INVENTION

It has now been found that a reduced-calorie and low-sugar dairy product can be prepared that fits for purposes of weight management, of which the taste closely resembles that of a non-reduced-calorie dairy product (full sugar reference), especially in terms of pleasant taste effects such as fruit intensity and balanced flavour profile, and in the absence of unpleasant off-taste. This can be achieved by hydrolysis of at least a large part of the lactose present in the dairy product, and by adding a combination of an artificial sweetener and fructose to the dairy product. With the present invention a well-tasting non-frozen dairy product can be obtained which contains 30 - 50% less calories than its full sugar equivalent.

As mentioned above, fructose exhibits a taste improving effect on artificial sweetening systems. In addition, it has now surprisingly been found that hydrolysis of lactose gives an additional taste improvement that can be described as fruitier, more balanced and less off-taste. When making an artificially sweetened reduced-calorie dairy product with low amounts of sugar, a skilled person, faced with the problem of obtaining a taste profile which resembles that of its sugar-containing non-reduced-calorie counterpart, would never contemplate to subject the product to lactose hydrolysis, as this has never been associated in the art with improvement of the pleasant taste perception of fruitiness and balanced flavour profile, especially not in non-frozen applications.

The invention thus relates to a reduced-calorie non-frozen dairy product low in lactose and containing an artificial sweetener and fructose.

With a "dairy product" in the context of the invention it is understood a milk-based composition, i.e. a composition containing for at least 50 wt% of its solids content, preferably at least 75 wt%, from milk originating ingredients. The product preferably contains less than 5.0 g fat per kg product. Fats in the context of the invention include at least all mono-, di- and triglycerides, possibly esterified with organic acids, phospholipids and cholesterol in the product.

More preferably, the milk-based composition is skim milk, a term which is used generically to refer not only to skim milk and partially skim milk, but also to lactose-containing products derived from any of the above milks or whey. The dairy product obtained here from is thus described as a reduced-calorie dairy product, preferably being low in fat, preferably having a total fat content of less than 0.5 wt%, more preferably even less than 0.2 wt%.

Although the principles of the invention could be applied to obtain a well-tasting food which is meant to be consumed at low temperature, or even a frozen food application, the preferred embodiment of the invention encompasses a non-frozen dairy product, where taste perception is the highest. Non-frozen foods applications exclude for instance ice cream, ice milk, sherbets and mellorine.

The dairy product according to the invention is preferably a non-frozen fermented or non-fermented product, such as yoghurt, yoghurt drink, custard, pudding and flavoured milk drink, but is not restricted thereto. This dairy product can be both a fresh as well as a long life product (UHT). It is preferred that the product is a fermented dairy product, more preferably a yoghurt.

The product optionally contains fruit pieces, fruit pulp, fruit concentrate, fruit flavouring, fruit puree and/or fruit fibre and the like. Additional optional additives include artificial and/or natural flavours. Preferably the dairy product is a fruit yoghurt. It is found that the technical measures of the invention especially contribute to a positive taste perception of such "fruity" products.

In normal cow's milk, lactose is present in an appreciable amount, about 46 g/kg, or about 52 wt% of the non-fat solids content in cow's milk. A dairy product according to the invention thus comprises significantly less lactose. It is preferred that the product contains less than 10.0 g, more preferably less than 8.0 g, even more preferably less than 5.0 g and most preferably less than 2.0 g lactose per kg product. The dairy product of the invention preferably comprises at least 0.1 g lactose per kg product.

By the present invention, a non-frozen fermented dairy product can be obtained having 450 - 500 kcalories per kg, preferably even less than 450 kcalories/kg of the product. The product has a sweetness, balanced flavour profile and fruit intensity which closely resembles that of its full amount of sugar-containing counterpart, not treated with lactase, which generally has an amount of kcalories of around 800 per kg of the product. In general the calorie content of non-frozen dairy products can be reduced with at least 350 kcalories per kg product. Full sugar products normally contain 10 wt% sugar, whereas by the present invention a product with for instance about 1 wt% fructose can be obtained. A sugar reduction of 9% leads to a calorie reduction of 360 kcalories/kg.

The desired low lactose content is achieved through lactose hydrolysis, i.e. enzymatic cleavage of lactose. The use of an enzyme, particularly beta-galactosidase or beta-galactopyranosidase or, in short, lactase, in milk or milk based products, to hydrolyse lactose to its constituents is well known in the art, for instance from the above-discussed US 4,956,186 and WO-A-92/02143, their contents herein incorporated by reference. All skim products which contain lactose can be treated by the lactase process to reduce the lactose contents thereof. It is considered to be within the skilled person's knowledge to determine the optimal conditions for the lactase treatment.

In case processing of the dairy product involves a fermentation step, the lactase treatment can coincide with or precede such a fermentation step. Although the levels of lactose are reduced significantly in either way, it is observed that the residual lactose levels tend to be somewhat lower when the lactase is added to the starter culture and both treatments coincide. If desired, the lactase treatment can also be preceded by an ultrafiltration step as taught in US 4,956,186 to achieve a first decrease in the lactose content, to ultimately reach even lower lactose contents.

Apart from the aforementioned low lactose content a lactase-treated milk-based product is characterised by the presence of significant amounts of galactose. Whereas galactose is normally present in a fermented dairy product in an amount of about 10 g/kg, and in a non-fermented dairy product less than 0.1 g/kg, after lactose hydrolysis amounts of more than 16.0 g galactose per kg dairy product are observed. Thus in one embodiment the invention relates to a reduced-calorie non-frozen dairy product containing an artificial sweetener, fructose, less than 10.0 g lactose and more than 16.0 g galactose per kg product.

The dairy product of the invention contains the artificial sweetener in an amount of 0.0005 - 0.035 wt%, preferably 0.001 - 0.025 wt%, more preferably 0.0015 - 0.015 wt%. The exact amount of artificial sweetener can vary according to the desired level of sweetness, the amount of residual lactose left after treatment, the use of fruit, and the acidity of the product. Products having a pH of about 7 require lower amounts of sweetener than acidic products such as yoghurts. Moreover, the amount of artificial sweetener is also dependent on the amount of fructose available in the product.

Preferred artificial sweeteners include acesulfame-K, saccharin and cyclamate, aspartame and sucralose. In general it is known that combinations of sweeteners give a better result in terms of sweetness power than would be expected from the individual sweetness numbers. Therefore, the dairy product of the invention can also include a mixture of artificial sweeteners, preferably a mixture of acesulfame-K and aspartame.

However, it has surprisingly been found in a comparative panel test of various commercially available artificial sweeteners and combinations thereof that the improvement of taste of the dairy product was most profound when sucralose was applied as the artificial sweetener in the composition, combined with lactose hydrolysis and fructose addition. Therefore, in a preferred embodiment the dairy product contains sucralose as the artificial sweetener.

In the product fructose is present in an amount of 0.1 - 10 wt%, preferably 0.2 - 5 wt%, more preferably 0.3 - 3 wt%. Fructose is preferably present in its pure form; however it can also be applied as fructose syrup or as high fructose corn syrup. Beneficially, fructose also adds to the taste of sweetness, more than all available sugars.

The dairy product may optionally be pasteurised and/or homogenised before the enzymatic treatment using conventional techniques.

The invention also relates to a process for sweetening a reduced-calorie non-frozen dairy product according to the present invention, wherein an artificial sweetener and fructose are added to a reduced-calorie non-frozen dairy product, preferably a low-fat dairy product, having a reduced lactose content as a consequence of lactose hydrolysis, preferably enzymatic lactose hydrolysis, and wherein the lactose hydrolysis optionally coincides with or precedes a fermentation step. The process comprises at least the steps of: a) providing a lactose containing milk-based composition; b) subjecting the milk-based composition to lactose hydrolysis; and c) adding artificial sweetener and fructose to the lactose-hydrolyzed milk-based composition. Steps b) and c) are not necessarily performed directly after one another and/or at the same place. A lactose-hydrolyzed milk-based composition is obtained in step b) that has the aforementioned reduced lactose content and high galactose levels. Such a dairy product can be obtained by lactase treatment as discussed above.

It is preferred the lactose containing milk-based composition contains at least 43 g lactose per kg composition, so that after hydrolysis at least 16 g galactose per kg of the lactose-hydrolyzed milk-based composition is obtained. The amounts of artificial sweetener and fructose are chosen such to obtain the aforementioned levels in the final product, which levels do not differ from the concentrations of these compounds during processing.

The invention also relates to a process for preparing a reduced-calorie non-frozen dairy product according to the present invention, wherein a milk-based composition is subjected to lactose hydrolysis, and an artificial sweetener and fructose are added hereto.

The invention further relates to the use of lactose hydrolysis and fructose to balance flavour profile and fruit intensity and minimise off-taste in a reduced-calorie dairy product containing an artificial sweetener.

### PANEL TEST

### Preparation of a yoghurt

A yoghurt I with a protein content of 5 wt% was prepared by adding 0.5 wt% skim milk powder (Nordmilch, Bremen, Germany), 1 wt% sodium caseinate (DMV International, Veghel, The Netherlands) and 1 wt% whey protein concentrate (WPC 35, Friesland Foods Domo, Zwolle, The Netherlands) to pasteurised skim milk (0.05 wt% fat, Campina, Eindhoven, The Netherlands). The milk composition was heated in a streaming process to 92 °C for 6 minutes. After cooling to 40 °C the milk composition was inoculated with a standard yoghurt culture (Yo-Mix 401, Danisco Holland, Barendrecht, The Netherlands). A yoghurt having pH 4.5 was obtained after 6 - 10 hours, which was then cooled to 7 °C.

### Preparation of a lactase-treated yoghurt

Two yoghurts were prepared in accordance with the process of the present invention, wherein Lactase (Maxilact LG2000) was introduced at different stages in the above-described preparation process, at a dosage of 1 mg/kg.

Yoghurt II was prepared by adding lactase to the cold milk composition, after which the milk containing the enzyme was stored at 7 °C for 24 hours, before continuing the above procedure by heating in a streaming process.

Yoghurt III was prepared by adding the lactase to the milk composition only after the streaming process and cooling to 40 °C, but right before inoculation with the yoghurt culture.

The carbohydrate levels of the yoghurts with and without treatment are shown in table 1 and compared to the levels of the starting milk for yoghurt containing the protein powders before and after a lactase treatment. The concentrations of lactose, galactose and glucose were determined using HPLC with an ion exchange column (Dionex).

**Table 1 - Carbohydrate levels after different treatments**

| Product | Lactose (g/kg) | Galactose(g/kg) | Glucose(g/kg) |
|---|---|---|---|
| milk (with protein powders) | 47 - 50 | < 0.1 | <0.1 |
| milk after lactase treatment | 0.1 - 10 | 22 - 26 | 22 - 26 |
| yoghurt I (no lactase treatment) | 29 - 33 | 8 - 11 | < 1 |
| yoghurt II (first lactase treatment of the milk, followed by fermentation) | 2 - 5 | 20 - 22 | 13 - 16 |
| yoghurt III (lactase and yoghurt culture added together) | 0.5 - 4 | 20 - 24 | 6 - 15 |

The levels of lactose, glucose and galactose after both lactase treatments were rather similar; however the residual lactose levels tended to be somewhat lower in yoghurt III.

### Preparation of a strawberry yoghurt - experiment I

To the cooled yoghurts I and II a fruit preparation containing artificial sweeteners was added in a weight ratio of 1 part fruit and 9 parts yoghurt. The fruit preparation was supplied by Wild (Heidelberg, Germany), to which artificial sweeteners were added by mixing thoroughly. The preparations were stored for 24 hours to allow for complete blending.

Sweetened fruit yoghurt I (no lactase treatment) was prepared using a combination of aspartame and acesulfame-K (both from Arnold Suhr, Utrecht, The Netherlands), and sucralose (Tate & Lyle, Aalst, Belgium) and fructose (Danisco Sweeteners, Redhill, United Kingdom). To sweetened fruit yoghurt II (first lactase treatment of the milk, followed by fermentation) a combination of sucralose and fructose was added. The level of different sweetener combinations was chosen such that the overall perceived sweetness was similar to that of a fruit yoghurt I sweetened with 8.3 wt% sugar (CSM, Diemen, The Netherlands).

### Preparation of a strawberry yoghurt - experiment II

Similar to the above-described procedure fruit yoghurts I and II were prepared: one with a combination of 0.0036% aspartame, 0.0036% acesulfame, 0.0044% saccharin, 0.018% cyclamate and 1.4% fructose, and another one with 0.014% sucralose and 0.77% fructose. The numbers are based on the weight of the final product. The overall sweetness was similar to that of a fruit yoghurt I sweetened with 8.5 wt% sugar.

### Sensory evaluation

A panel consisting of 11 trained persons evaluated the fruit yoghurts I and II on sweetness, balanced flavour profile, fruit intensity and off taste. To summarize, I stands for a dairy product normal in lactose (no lactase treatment), II is a lactase-treated dairy product.

The panel was trained in advance to be able to judge the different taste attributes. The products were presented to the panel in a blinded way. Products were labelled with random numbers, the products were presented to the panellists in random order and each product was presented two times to the panellists on the same morning in different sessions. The data were analysed with the statistical package SPSS 12 applying Analysis of Variance with product, panel member and session as fixed factors, allowing for one way interaction. Multiple comparison was done using Least Significant Differences. Outcomes with the same letter (A, B or C) belong to the same group, and are statistically not different, a double letter (e.g. AB) means that the outcome belongs to two groups (e.g. here A and B).

The results of the tests are presented in the tables 2 and 3, together with their standard deviation values and an ANalysis Of VAriance to determine the significance of the differences between the various products.

**Table 2 - Sensory evaluation of strawberry yoghurts - Experiment I (values are given +/- standard deviation)**

| Taste attribute | Fruit yoghurt I (no lactase treatment) | | | Fruit yoghurt II (lactase treatment) | ANOVA P |
|---|---|---|---|---|---|
| | 8.3% sugar | 0.012% aspartame | 0.010% sucralose | 0.0085% sucralose | |
| | | 0.012% acesulfame-K | 1.5% fiuctose | 1.5% fiuctose | |
| Sweetness | 4.90±1.74 | 4.45±1.72 | 5.24±1.67 | 4.84±1.50 | 0.22 |
| In balance | 6.70±2.13 | 5.49±2.26 | 6.07±1.83 | 6.33±2.63 | 0.10 |
| Fruit intensity | 4.80±1.39 | 3.98±1.33 | 4.19±1.48 | 4.42±1.27 | 0.03 |
| | A | B | B | AB | |
| Off-taste | 0.32±0.61 | 0.59±1.19 | 0.48±1.26 | 0.62±1.15 | 0.38 |

It is concluded from table 2 that the overall sweetness for all products was similar (p-value > 0.05). However for the fruit intensity a significant difference (p=0.03) was observed between the individual products. The yoghurt I formulation with sugar had the highest fruit intensity, the yoghurt I (no lactase treatment) with aspartame/acesulfame-K and sucralose/fructose showed a lower fruit perception. The yoghurt II formulation with sucralose/fructose and lactose split had a fruit intensity that statistically was not different from that of a yoghurt I containing normal sugar, both belonging to the same group A in the multiple comparison procedure. The fruit impression in the sucralose/fructose/hydrolysed-lactose formulation was the closest to the yoghurt I formulation with sugar, far better than the combination of a yoghurt I high in lactose and sweetened with aspartame/acesulfame. For perceived balance a similar trend was found: Again the reduced lactose yoghurt containing sucralose and fructose was the next best compared to yoghurt I with sugar.

**Table 3 - Sensory evaluation of strawberry yoghurts - Experiment II (values are given +/- standard deviation)**

| Taste attribute | Fruit yoghurt I (no lactase treatment) | | | Fruit yoghurt II (lactase treatment) | | ANOVA p |
|---|---|---|---|---|---|---|
| | 8.5% sugar | 0.0036% aspartame | 0.014% sucralose | 0.0036% aspartame | 0.014% sucralose | |
| | | 0.0036% acesulfame-K | 0.77% fructose | 0.0036% acesulfame-K | 0.77% fructose | |
| | | 0.0044% saccharin | | 0.0044% saccharin | | |
| | | 0.018% cyclamate | | 0.018% cyclamate | | |
| | | 1.4% fructose | | 1.4% fructose | | |
| Sweetness | 4.71±1.41 | 3.49±1.99 | 4.49±2.14 | 4.54±1.70 | 4.90±1.97 | 0.09 |
| In balance | 6.46±2.73 | 3.98±2.43 | 5.40±1.83 | 5.59±2.84 | 5.45±2.74 | 0.02 |
| | A | B | A | A | A | |
| Fruit intensity | 3.94±1.59 | 2.81±1.48 | 3.96±1.24 | 3.83±1.55 | 4.21±1.54 | 0.03 |
| | A | B | A | A | A | |
| Off-taste | 1.43±2.61 | 2.42±3.50 | 2.12±3.12 | 2.37±3.13 | 1.25±2.66 | 0.01 |
| | BC | A | AB | A | C | |

From table 3 it can be concluded that the "In balance" and "fruit intensity" significantly improved with lactose hydrolysis. "Off-taste" significantly decreased with lactose hydrolysis in the sucralose/fructose system.

## Claims

1. A reduced-calorie non-frozen dairy product containing an artificial sweetener, fructose, less than 10.0 g lactose and more than 16.0 g galactose per kg product.

2. The dairy product according to claim 1, containing less than 5.0 g fat per kg product.

3. The dairy product according to claim 1 or 2, wherein said product is a fermented product.

4. The dairy product according to any of the preceding claims, wherein said artificial sweetener is present in the product in an amount of 0.0005 - 0.035 wt%.

5. The dairy product according to any one of the preceding claims, wherein said fructose is present in the product in an amount of 0.1 -10 wt%.

6. The dairy product according to any one of the preceding claims, wherein said artificial sweetener is sucralose.

7. A process of preparing a reduced-calorie non-frozen dairy product, comprising:
a. providing a lactose-containing milk-based composition;
b. subjecting said milk-based composition to lactose hydrolysis; and
c. adding artificial sweetener and fructose to the lactose-hydrolyzed milk-based composition.

8. The process according to claim 7, wherein a milk-based composition is obtained containing less than 10.0 g lactose and more than 16.0 g galactose per kg product.

9. The process according to claim 7 or 8, wherein said lactose hydrolysis coincides with or precedes a fermentation step.

10. The process according to any one of claims 7 - 9, wherein said artificial sweetener is added to said milk-based composition in an amount of 0.0005 - 0.035 wt%, based on the total weight of the composition.

11. The process according to any one of claims 7 - 10, wherein said fructose is added to said milk-based composition in an amount of 0.1 - 10 wt%, based on the total weight of the composition.

12. Use of lactose hydrolysis and fructose to balance flavour profile and fruit intensity, and minimise off-taste in a reduced-calorie dairy product containing an artificial sweetener.
